# EUROPÄISCHE PATENTSCHRIFT

(11) **EP 3 536 127 B1**
(45) Veröffentlichungstag und Bekanntmachung des Hinweises auf die Patenterteilung: **15.09.2021**
(21) Anmeldenummer: 17784956.9
(22) Anmeldetag: 18.10.2017
(51) Int. Cl.: H05B 45/20, H05B 47/18

(54) **BELEUCHTUNGSVORRICHTUNG UND BELEUCHTUNGSSYSTEM FÜR EIN KRAFTFAHRZEUG SOWIE VERFAHREN ZUM BETREIBEN EINES BELEUCHTUNGSSYSTEMS FÜR EIN KRAFTFAHRZEUG**
LIGHTING DEVICE AND LIGHTING SYSTEM FOR A MOTOR VEHICLE AND METHOD FOR OPERATING A LIGHTING SYSTEM FOR A MOTOR VEHICLE
DISPOSITIF D'ÉCLAIRAGE ET SYSTÈME D'ÉCLAIRAGE POUR VÉHICULE À MOTEUR, ET PROCÉDÉ POUR FAIRE FONCTIONNER UN SYSTÈME D'ÉCLAIRAGE DESTINÉ À UN VÉHICULE À MOTEUR

(30) Priorität: 07.11.2016 DE 102016221772
(43) Veröffentlichungstag der Anmeldung: 11.09.2019
(73) Patentinhaber: Bayerische Motoren Werke Aktiengesellschaft, 80809 München (DE)
(72) Erfinder: ISELE, Robert, 82256 Fuerstenfeldbruck (DE); ALTINGER, Florian, 80807 München (DE); BRUEGL, Juergen, 81669 Muenchen (DE)
(86) Internationale Anmeldenummer: PCT/EP2017/076526
(87) Internationale Veröffentlichungsnummer: WO 2018/082918

(56) Entgegenhaltungen:
- WO-A1-2007/003006
- DE-A1-102014 223 122
- DE-A1-102015 009 736
- DE-U1-202005 020 801
- US-A1- 2009 237 011
- US-A1- 2010 219 758
- US-A1- 2011 309 746
- US-A1- 2015 351 173

## Beschreibung

Die Erfindung betrifft eine Beleuchtungsvorrichtung und ein Beleuchtungssystem für ein Kraftfahrzeug sowie ein korrespondierendes Verfahren zum Betreiben eines Beleuchtungssystems, die eine platzsparende Anordnung sowie einen zuverlässigen und erweiterten Betrieb der Beleuchtungsvorrichtung ermöglichen.

Beleuchtungsvorrichtungen in Kraftfahrzeugen mit Mehrfarb-LED-Einheiten (LED = "Light Emitting Diode") sind aus dem Stand der Technik bekannt. Solche LED-Einheiten umfassen in der Regel mehrere Einfarb-LEDs und werden üblicherweise mit LED-Treibern angesteuert, um eine gewünschte Helligkeit und einen Farbort (d.h. eine Mischfarbe) zu variieren. Hierzu wird ein Modul mit einem Mikroprozessor verwendet, der zum einen eine Kommunikation mit einem Kraftfahrzeug-Datenbus übernimmt und zum anderen die LED-Einheiten treibt, üblicherweise über PWM-Ausgänge (PWM = "Puls-Width Modulation"). Als Kraftfahrzeug-Datenbus kommt dabei häufig der sog. LIN-Bus (LIN = "Local Interconnect Network") zum Einsatz.

Manche Mehrfarb-LED-Einheiten verfügen über eine integrierte Schaltung, welche zusammen mit den Einfarb-LEDs, die über einen Datenstrom gesteuert werden, in einem Gehäuse untergebracht ist. Dabei werden Parametrisierungen, die in Beleuchtungsvorrichtungen mit Mehrfarb-LED-Einheiten zum Betrieb der einzelnen LED-Einheiten benötigt werden, in einem zentralen Verarbeitungsmodul hinterlegt.

Die Druckschrift WO 2014/067830 A1 offenbart ein Verfahren und eine Anordnung zur temperaturkorrigierten Steuerung von LEDs mittels Look-up-Tabellen. Dabei ist in einem LED-Modul aus mehreren LED-Kanälen für jeden Zielfarbort, der durch das LED-Modul erreichbar ist, eine Look-up-Tabelle vorgesehen, in welcher der Betriebsstrom für jeden LED-Kanal in Abhängigkeit von Temperatur abgelegt ist.

Die Druckschrift US 2010/0219758 A1 offenbart eine Beleuchtungseinheit mit Beleuchtungsmodulen, die einen Modulträger umfasst, auf dem eine Lichtquelle und Leuchtdioden angeordnet sind. Darüber hinaus sind ein Temperatursensor und eine Modulelektronik vorgesehen, welche mittels einer digitale Schaltung mit einem Mikrocontroller eine Steuerung der LEDs in Abhängigkeit von Parametern wie der Temperatur und einer Helligkeit ermöglicht, um eine konstante Lichtemission der LEDs bereitzustellen.

Die Druckschrift DE 102015009736 A1 offenbart ein Leuchtmodul mit einem Farbkanal, welcher mindestens eine Lichtquelle enthält. Das Leuchtmodul umfasst ferner einen Speicher für mindestens einen Kennwert der Lichtquelle oder des Farbkanals. Ferner ist ein Beleuchtungssystem mit einem solchen Leuchtmodul offenbart, das eine Steuer- und Auswerteeinheit aufweist, um einen Betriebsparameter für die Lichtquelle auf Basis des Kennwertes aus dem Speicher des Leuchtmoduls zu ermitteln.

In einer weiteren Druckschrift DE 102014223122 A1 ist ein Kommunikationssystem zur Ansteuerung von mehreren Teilnehmern offenbart, die zum Beispiel LED-Module innerhalb eines Kraftfahrzeugs darstellen. Das Kommunikationssystem umfasst einen Kontroller sowie die Teilnehmer, die hardwaretechnisch seriell in einer Ringstruktur über eine Datenleitung verbunden sind. Zur Ansteuerung der einzelnen Teilnehmer wird ein Datenbus mit einem Kommunikationsprotokoll verwendet, welches eine lineare Aneinanderreihung von Datenpaketen aufweist, wobei für jeden Teilnehmer ein teilnehmerspezifisches Datenpaket vorgesehen ist.

In einer weiteren Druckschrift US 2011/309746 A1 ist eine LED-Leuchteinheit offenbart, die als Basis für ein Fahrzeugbeleuchtungssystem dient. Die Leuchtdioden-Einheit umfasst ein LED-Modul, mit mehreren LEDs, einer LED-Ansteuerschaltung, die die LEDs ansteuert, und einen LED-Steuerbus, der Informationen einer LED-Beleuchtungssteuerung zur LED-Ansteuerschaltung überträgt. Die LED-Leuchteinheit umfasst weiter ein Gehäuse, das LED-Modulkomponenten zumindest teilweise umgibt, und ein Stromversorgungs- und Steuermodul zum Umwandeln von Spannungspegeln. Darüber hinaus ist auch ein Mikrocontroller vorgesehen, der Beleuchtungsanweisungen von einer externen Quelle empfängt.

Es ist eine Aufgabe, die der Erfindung zugrunde liegt, eine Beleuchtungsvorrichtung und ein Beleuchtungssystem für ein Kraftfahrzeug sowie ein korrespondierendes Verfahren zum Betreiben eines Beleuchtungssystems zu schaffen, die eine platzsparende Anordnung ermöglichen sowie zu einem zuverlässigen und erweiterten Betrieb der Beleuchtungsvorrichtung beitragen können. Die Aufgabe wird durch die Merkmale der unabhängigen Patentansprüche gelöst. Vorteilhafte Ausgestaltungen sind in den Unteransprüchen angegeben.

Gemäß einem ersten Aspekt der Erfindung umfasst eine Beleuchtungsvorrichtung für ein Kraftfahrzeug ein Verarbeitungsmodul, welches dazu ausgebildet ist, Signale von einem Datenbus des Kraftfahrzeugs zu empfangen, zu verarbeiten und zu versenden. Die Beleuchtungsvorrichtung umfasst weiter eine Mehrzahl von LED-Einheiten, welche jeweils dazu ausgebildet sind, in einem betriebsgemäßen Zustand Licht mit einstellbarer Helligkeit und vorgegebenem Farbort zu emittieren, wobei die LED-Einheiten jeweils einen Mikrocontroller und eine Mehrzahl von LEDs aufweisen und wobei der jeweilige Mikrocontroller und die zugehörigen LEDs von einem Gehäuse der LED-Einheit umgeben sind. Die LED-Einheiten sind weiter dazu ausgebildet, bidirektional mit dem Verarbeitungsmodul zu kommunizieren, sodass mittels der LED-Einheiten und des Verarbeitungsmoduls ein aktueller Statuswert einer jeweiligen LED-Einheit ermittelbar ist, welcher repräsentativ für eine Funktionalität der jeweiligen LED-Einheit ist. Die Beleuchtungsvorrichtung ist ferner derart eingerichtet, dass der aktuelle Statuswert der jeweiligen LED-Einheit unabhängig von einem Betriebszustand der zugehörigen LEDs ermittelbar ist. Zudem umfasst eine jeweilige LED-Einheit einen Temperatursensor, der dazu ausgebildet ist, einen aktuellen Temperaturwert an der jeweiligen LED-Einheit zu messen und bidirektional mit dem Verarbeitungsmodul zu kommunizieren, sodass mittels des Temperatursensors und des Verarbeitungsmoduls der aktuelle Temperaturwert an der jeweiligen LED-Einheit abrufbar bzw. ermittelbar ist. Darüber hinaus umfasst eine jeweilige LED-Einheit einen Lichtsensor, der dazu ausgebildet ist, einen aktuellen Helligkeitswert an der jeweiligen LED-Einheit zu messen und bidirektional mit dem Verarbeitungsmodul zu kommunizieren, sodass mittels des Lichtsensors und des Verarbeitungsmoduls der aktuelle Helligkeitswert an der jeweiligen LED-Einheit ermittelbar ist.

Mittels der beschriebenen Beleuchtungsvorrichtung kann eine platzsparende Beleuchtungsfunktion realisiert werden, um beispielsweise einen Abschnitt in oder an einem Kraftfahrzeug zu beleuchten, und der beschriebene Aufbau ermöglicht darüber hinaus, einen aktuellen Statuswert der LED-Einheit abzurufen, indem die LED-Einheit mit dem Verarbeitungsmodul signaltechnisch kommuniziert, sodass die LED-Einheit hinsichtlich ihrer Funktionalität überwacht werden kann. Mittels des Temperatursensors können weitere Daten der jeweiligen LED-Einheit erhoben werden, die zu einem zuverlässigen und erweiterten Betrieb der Beleuchtungsvorrichtung beitragen können. Die LED-Einheit realisiert ein Halbleiterbauelement, welches in einem emittierenden Betrieb bei anliegender elektrischer Spannung beziehungsweise Strom Licht vorgegebener Farbe ausstrahlt.

Darüber hinaus kann die LED-Einheit aufgrund des beschriebenen Aufbaus und der Kommunikationsfähigkeit dazu genutzt werden, Informationen bezüglich eines Status bereitzustellen, indem die LED-Einheit fortlaufend, in vorgegebenen Zeitintervallen oder auf Anfrage seitens des Verarbeitungsmoduls Statussignale an diese versendet, welche repräsentativ sind für eine Funktionalität. Beispielsweise umfassen solche Statussignale Daten über eine Strom/Spannungskennlinie oder eine Anzahl an Betriebsstunden, sodass Rückschlüsse über eine Lebensdauer möglich sind. Die beschriebene Beleuchtungsvorrichtung mit LED-Einheit ermöglicht es daher, aktuelle Betriebsdaten auszulesen, sodass ein Beitrag für einen zuverlässigen und kontrollierten Betrieb geleistet wird.

Beispielsweise kann infolge einer abgerufenen beziehungsweise ermittelten Spannungskennlinie, die darauf schließen lässt, dass eine Helligkeit der überprüften LED einen vorgegeben Schwellenwert unterschreitet, ein Bestromen dieser LED erhöht werden, um die Helligkeit dieser LED bis in einen vorgegebenen Toleranzbereich zu erhöhen. Außerdem kann zum Beispiel infolge einer ermittelten Betriebsdauer einer LED, die in naher Zukunft eine voraussichtliche Lebensdauer dieser LED überschreitet, eine Information ausgegeben werden, welche über diesen Zustand der LED oder der zugehörigen LED-Einheit informiert und einen Austausch dieser LED empfiehlt.

Aufgrund des beschriebenen Aufbaus der Beleuchtungsvorrichtung und der bidirektionalen Kommunikationsfähigkeit einer jeweiligen LED-Einheit können zu jeder Zeit Daten einer jeweiligen LED-Einheit erhoben werden, welche insbesondere dazu beitragen können, den sogenannten ASIL-Standard (ASIL = "Automotive Safety Integrity Level") vorgegeben zu halten oder zu verbessern. Dieser zielt darauf ab, ein vorgegebenes Grundsicherheitslevel zu gewährleisten. Auf diese Weise kann zum Beispiel eine Zuverlässigkeit einer LED an einer Ganganzeige eines Kraftfahrzeugs überwacht werden, welche für einen kontrollierten und sicheren Betrieb des Kraftfahrzeugs verlässlich darüber Auskunft zu geben hat, ob beispielsweise ein Vorwärtsgang "D" oder Rückwärtsgang "R" eingerichtet ist.

Mittels des Verwaltungsmoduls kann bei der entsprechenden LED angefragt werden, ob ein lichtemittierender Betriebszustand vorliegt und somit die Funktionalität der LED überprüft werden. Auf diese Weise kann jede einzelne LED-Einheit gezielt angesteuert und ein aktueller Statuswert abgerufen werden, wobei dasselbe Interface, welches zum Betreiben und Ansteuern der LED-Einheit eingesetzt wird, auch zur Diagnose verwendet wird. Dies ist dadurch ermöglicht, dass jede LED-Einheit einen eigens im Gehäuse angeordneten Mikrocontroller aufweist und digital ansteuerbar ist und entsprechend keine Ansteuerung mittels einer Stromversorgung diesbezüglich benötigt. Aufgrund der bidirektionalen Kommunikationsfähigkeit kann die zur Beleuchtung befähigte LED-Einheit weiter dazu genutzt werden, um eine Rücklesbarkeit von Daten von der LED-Einheit zu ermöglichen, welche Informationen über eine Funktionalität der LED-Einheit enthalten.

Die Beleuchtungsvorrichtung ist für ein Kraftfahrzeug, wie zum Beispiel einen PKW und gegebenenfalls auch einen LKW, vorgesehen. Bevorzugt weist die Beleuchtungsvorrichtung mehrere LED-Einheiten auf, die jeweils einen Mikrokontroller und mehrere LEDs umfassen, die jeweils in einem gemeinsamen Gehäuse der jeweiligen LED-Einheit integriert sind. Eine einzelne LED-Einheit realisiert somit ein Halbleiterbauelement, welches aufgrund des internen Mikrokontrollers auch als "intelligente" LED bezeichnet werden kann.

Bevorzugt ist die jeweilige LED-Einheit an einem internen Datenbus (d.h. einen Datenbus innerhalb der Beleuchtungsvorrichtung) angeschlossen, welcher wiederum mit dem Verarbeitungsmodul gekoppelt ist. Mittels des Verarbeitungsmoduls können Signale empfangen, verarbeitet und versendet werden. Solche Signale umfassen beispielsweise externe Steuerbefehle von einem Kraftfahrzeug-Datenbus, die mittels des Verarbeitungsmoduls in interne Steuerbefehle gewandelt und auf den internen Datenbus gegeben werden können, um die Helligkeit und den Farbort einer oder mehrerer LED-Einheiten einzustellen. Der interne Datenbus kann z.B. ein SPI-Datenbus (SPI = "Serial Peripheral Interface") sein oder gegebenenfalls auch ein anderer Datenbus, wie z.B. ein differentieller Datenbus, der digitale Daten über eine Spannungsdifferenz zwischen zwei Leitungen codiert. Der Kraftfahrzeug-Datenbus kann beispielsweise ein LIN-Bus (LIN = "Local Interconnect Network") oder auch ein CAN-Bus (CAN = "Controller Area Network") sein.

Die eine oder mehrere LED-Einheiten sind jeweils in Bezug auf ihre Helligkeit (d.h. Lichtintensität) einstellbar und emittieren Licht mit einem vorgegebenen Farbort. Der Begriff des Farborts beschreibt eine Farbe des emittierenden Lichts und kann einfarbig oder als Mischfarbe realisiert sein, welche durch die jeweilige LED-Einheit erzeugt wird. Der Farbort kann beispielsweise als Ort in einem Farbdiagramm, insbesondere in einem Farbdiagramm des CIE-Normenvalenzsystems (CIE = "Commission internationale de l'eclairage"), angegeben werden.

Zum Beispiel kann eine LED-Einheit mehrere LEDs aufweisen, welche jeweils blaues Licht oder Licht unterschiedlicher Farbe beziehungsweise Wellenlänge emittieren. Im letzteren Fall realisiert die LED-Einheit eine Mehrfarb-LED-Einheit mit einstellbarem Farbort. Eine jeweilige LED-Einheit weist als ein einzelnes Halbleiterbauelement vorzugsweise mindestens drei Einfarb-LEDs unterschiedlicher Farbe auf, die zusammen mit dem Mikrocontroller der LED-Einheit in einem gemeinsamen Gehäuse des Halbleiterbauelements untergebracht sind. Der Aufbau eines solchen Halbleiterelements ermöglicht eine vorgegebene Lichtemission basierend auf den elektronischen Halbleitereigenschaften und kann darüber hinaus zum Ermitteln eines Statuswertes der jeweiligen LED-Einheit verwendet werden, welcher dem Verarbeitungsmodul und/oder dem Mikrocontroller bereitstellt werden kann. Ein solches Ermitteln eines Statuswertes einer LED beziehungsweise einer LED-Einheit kann sowohl während eines lichtemittierenden Betriebs als auch unabhängig von einem solchen durchgeführt werden.

Die beschriebene Beleuchtungsvorrichtung weist somit eine Vielzahl von Funktionen auf, die jeweils in einem Halbleitergehäuse einer LED-Einheit integriert sind, sodass benötigte Verkabelungen beziehungsweise Verdrahtungen der LED-Einheit mit dem Verarbeitungsmodul reduziert werden können und das Verarbeitungsmodul als Ansteuerungscontroller kleiner ausgestaltet werden kann. Auf diese Weise kann ein platzsparender Aufbau der Beleuchtungsvorrichtung realisiert werden, welcher sich vorteilhaft auf mögliche Einbaupositionen in oder an einem Kraftfahrzeug auswirken kann. Ein solcher Bauraumvorteil ist insbesondere bei einer Beleuchtungsvorrichtung mit einer hohen Anzahl an LED-Einheiten präsent.

Gemäß einer Weiterbildung der Beleuchtungsvorrichtung sind der Mikrocontroller und das Verarbeitungsmodul dazu ausgebildet sind, bidirektional miteinander zu kommunizieren. Das Verarbeitungsmodul ist insbesondere dazu eingerichtet, mit der LED-Einheit beziehungsweise mit dem Mikrocontroller signaltechnisch zu kommunizieren und einen aktuellen Statuswert ermitteln. Eine solche Kommunikation umfasst ein Empfangen und Versenden von Daten und kann direkt zwischen den jeweiligen zur Kommunikation befähigten Komponenten erfolgen.

Gemäß einer Weiterbildung der Beleuchtungsvorrichtung ist die LED-Einheit als Mehrfarb-LED-Einheit und die LEDs jeweils als Einfarb-LEDs ausgebildet. Gemäß einer weiteren Weiterbildung der Beleuchtungsvorrichtung umfasst die LED-Einheit eine RGB-LED-Einheit und/oder eine RGBW-LED-Einheit. Eine RGB-LED-Einheit umfasst in an sich bekannter Weise eine rote, grüne und blaue Einfarb-LED und eine RGBW-LED-Einheit umfasst zusätzlich zu einer roten, grünen und blauen LED auch eine Weißlicht-LED.

Dadurch, dass die Beleuchtungsvorrichtung beziehungsweise die jeweilige LED-Einheit einen Lichtsensor umfasst, ist mittels des Lichtsensors und des Verarbeitungsmoduls der aktuelle Helligkeitswert an der LED-Einheit abrufbar beziehungsweise ermittelbar. Auf diese Weise kann zu jeder Zeit unabhängig von einem Ansteuern und Betreiben der jeweiligen LEDs ein Ermitteln und Abrufen eines aktuellen Helligkeitswertes am Ort der jeweiligen LED-Einheit erfolgen, welcher insbesondere Auskunft über eine Helligkeit des Umgebungslichts enthalten kann.

Aufgrund des beschriebenen Aufbaus der Beleuchtungsvorrichtung beziehungsweise einer jeweiligen LED-Einheit, kann das Verarbeitungsmodul als Ansteuerungsmodul kleiner ausgeführt sein, sodass weiter zu einem übersichtlichen und platzsparenden Aufbau beigetragen wird. Darüber hinaus können mittels einer Vielzahl von LED-Einheiten, welche in einem verbauten Zustand in und/oder an einem Kraftfahrzeug angeordnet sind, Zusammenhänge über ein Fahrzeugkollektiv des Kraftfahrzeugs ermittelt werden und Informationen über Statuswerte und lokale Eigenheiten einer jeweils verbauten LED-Einheit erlangt werden. Eine solche Datenerhebung ermöglicht auch eine Rückholbarkeit von Daten, auch wenn eine elektrische Spannung zwischenzeitlich nicht mehr anliegt. In einem solchen Fall wird dann zum Beispiel ein vorangegangener Ist-Zustand der LED-Einheit abgerufen.

Gemäß einem weiteren Aspekt der Erfindung umfasst ein Beleuchtungssystem für ein Kraftfahrzeug mindestens eine Ausgestaltung der zuvor beschriebenen Beleuchtungsvorrichtung sowie das Kraftfahrzeug. Die Beleuchtungsvorrichtung ist insbesondere in oder an dem Kraftfahrzeug angeordnet und verbaut und bildet eine Innenraumbeleuchtung und/oder eine Außenbeleuchtung aus. Das Kraftfahrzeug kann auch mehrere Ausgestaltungen der beschriebenen Beleuchtungsvorrichtung aufweisen, von denen beispielsweise eine in und eine weitere an dem Kraftfahrzeug angeordnet ist und eine entsprechende Beleuchtungsfunktion realisiert. Hierdurch können ansprechende Lichteffekte mit einem homogenen Erscheinungsbild generiert werden. Darüber hinaus ermöglicht die Beleuchtungsvorrichtung ein Abrufen eines aktuellen Statuswertes der jeweiligen LED-Einheit auch unabhängig von dem Betriebszustand der LEDs und einer gegebenenfalls aktivierten Beleuchtungsfunktion. Da das Beleuchtungssystem wenigstens eine Ausgestaltung der zuvor beschriebenen Beleuchtungsvorrichtung umfasst, sind sämtliche Merkmale und Eigenschaften der Beleuchtungsvorrichtung auch für das Beleuchtungssystem offenbart und umgekehrt.

Gemäß einem weiteren Aspekt der Erfindung umfasst ein Verfahren zum Betreiben einer Ausgestaltung des zuvor beschriebenen Beleuchtungssystems für ein Kraftfahrzeug ein Empfangen von Statussignalen der LED-Einheit, welche repräsentativ für eine Funktionalität der LED-Einheit sind. Das Verfahren umfasst weiter ein Ermitteln eines aktuellen Statuswertes der LED-Einheit in Abhängigkeit der empfangenen Statussignale der LED-Einheit und ein Steuern einer Funktion des Kraftfahrzeugs in Abhängigkeit des ermittelten Statuswertes der LED-Einheit.

Das beschriebene Verfahren ermöglicht ein Abrufen eines aktuellen Statuswertes der jeweiligen LED-Einheit des Beleuchtungssystems beziehungsweise der Beleuchtungsvorrichtung, sodass beispielsweise Informationen über eine Strom- oder Spannungskennlinie oder über eine Anzahl an Betriebsstunden einer einzelnen LED beziehungsweise einer jeweiligen LED-Einheit ermittelt werden können. Das Steuern einer Funktion des Kraftfahrzeugs kann den Betrieb der LED-Einheit beziehungsweise der Beleuchtungsfunktion der Beleuchtungsvorrichtung umfassen, aber das beschriebene Verfahren ermöglicht auch ein Steuern einer Funktion in Abhängigkeit des ermittelten Statuswertes außer dem lichtemittierenden Betrieb der LED-Einheit.

Die mittels der LED-Einheit erhobenen Daten werden von dem Verarbeitungsmodul gesammelt und ausgewertet oder für spätere Verarbeitung bereitgestellt werden. Der ermittelte Statuswert kann zum Beispiel in einer Datenbank des Kraftfahrzeugs oder einer externen Datenbank abgespeichert und für weitere Auswertungen hinterlegt werden, um beispielsweise einen Helligkeitsverlauf ermitteln zu können. Der ermittelte Statuswert kann auch dazu genutzt werden, um beispielsweise die Beleuchtungsfunktion der Beleuchtungsvorrichtung anzupassen oder eine Ausgabe mit einer Information bezüglich des ermittelten Statuswertes bereitstellen.

Eine solche bereitgestellte Ausgabe kann zum Beispiel mittels einer dazu befähigten Signalausgabe dem Fahrer des Kraftfahrzeuges signalisieren, dass eine Funktionalität einer LED oder einer LED-Einheit eingeschränkt und nicht gegeben ist. Darüber hinaus kann infolge eines ermittelten Statuswertes, welcher Daten über eine nicht oder fehlerhaft funktionierende LED-Einheit enthält, ein Deaktivieren einer Funktionen des Kraftfahrzeugs bewirken. Beispielsweise wird ermittelt, dass eine LED-Einheit an einer Ganganzeige nicht funktioniert, sodass ein Betrieb des Kraftfahrzeugs deaktiviert wird oder zumindest ein separates Freigeben erfordert.

Ausführungsbeispiele der Erfindung sind im Folgenden anhand der schematischen Zeichnungen näher erläutert. Es zeigen:
- Figur 1: ein Ausführungsbeispiel eines Beleuchtungssystems für ein Kraftfahrzeug in einer schematischen Aufsicht,
- Figur 2: ein Ausführungsbeispiel einer Beleuchtungsvorrichtung für ein Kraftfahrzeug in einer schematischen Darstellung,
- Figur 3: ein Ausführungsbeispiel einer LED-Einheit der Beleuchtungsvorrichtung nach Figur 2 in einer Detailansicht.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit zugehörigen Bezugszeichen gekennzeichnet.

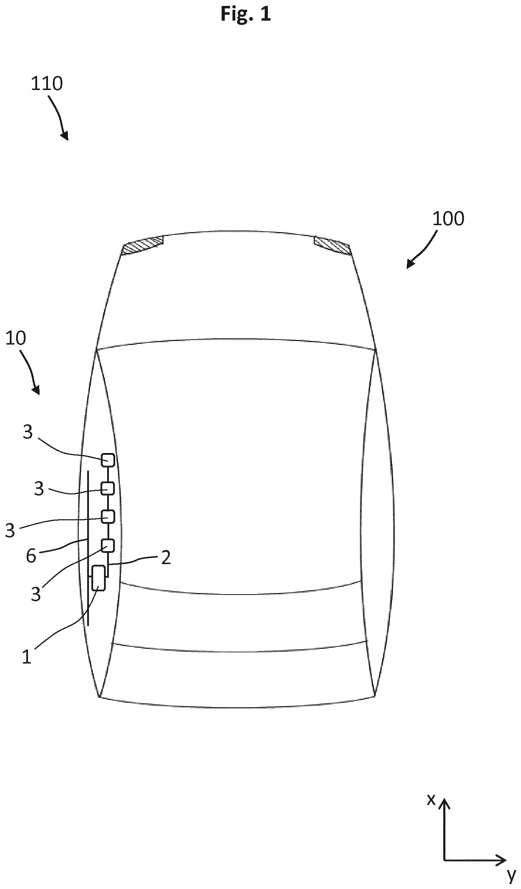

Figur 1 illustriert schematisch in einer Aufsicht ein Beleuchtungssystem 110, welches ein Kraftfahrzeug 100 sowie eine Beleuchtungsvorrichtung 10 mit einer Mehrzahl von LED-Einheiten 3 umfasst. Die LED-Einheiten 3 sind jeweils mit einem internen Datenbus 2 gekoppelt, welcher die LED-Einheiten 3 wiederum mit einem Verarbeitungsmodul 1 koppelt. Das Verarbeitungsmodul 1 ist wiederum mit einem Kraftfahrzeug-Datenbus 6 gekoppelt.

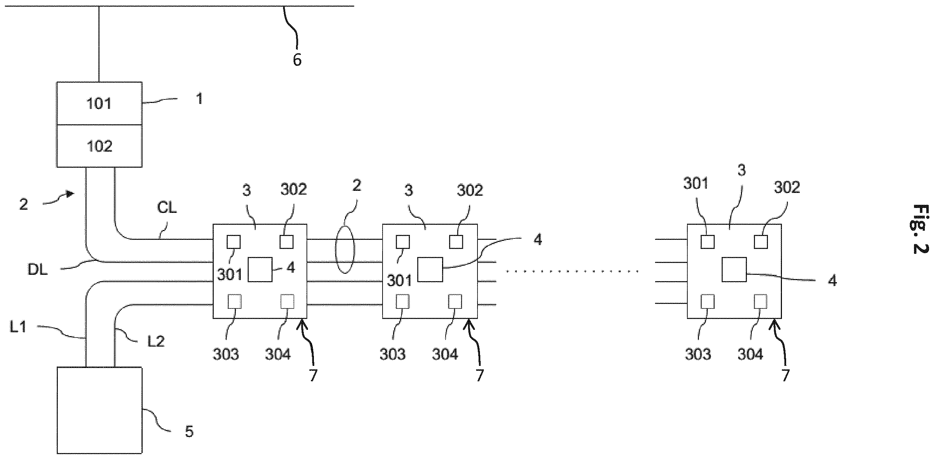

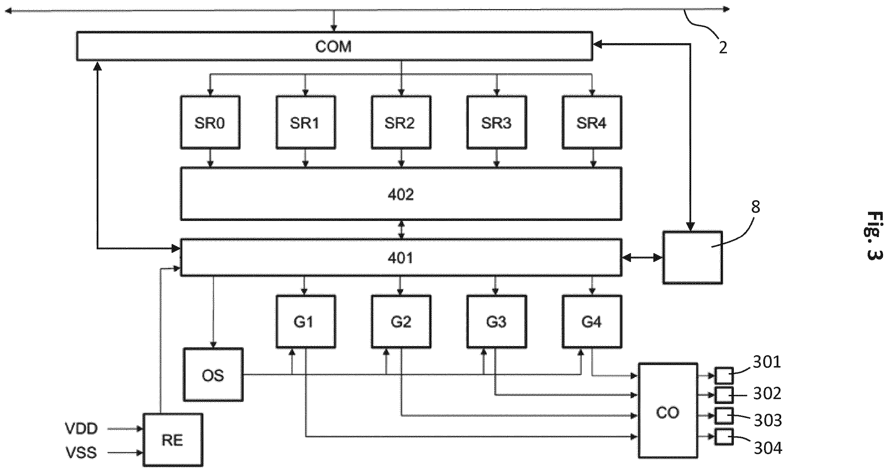

Wie anhand der nachfolgenden Figuren 2 und 3 näher erläutert wird, ermöglicht die Beleuchtungsvorrichtung 10 beziehungsweise das Beleuchtungssystem 110 eine platzsparende Beleuchtungsfunktion, um beispielsweise einen Abschnitt in oder an dem Kraftfahrzeug 100 zu beleuchten, und darüber hinaus ein Ermitteln eines aktuellen Helligkeitswertes am Ort der einer jeweiligen LED-Einheit 3.

Figur 2 stellt schematisch eine Ausführungsform der Beleuchtungsvorrichtung 10 dar, welche beispielsweise, wie in Figur 1 illustriert, in dem Kraftfahrzeug 100 eine Innenbeleuchtung ausbildet. Alternativ kann die Beleuchtungsvorrichtung 10 als Außenbeleuchtung an dem Kraftfahrzeug 100 angeordnet sein oder das Beleuchtungssystem 110 umfasst mehrere Beleuchtungsvorrichtungen 10, die in und/oder an dem Kraftfahrzeug 100 verbaut sind.

Die Beleuchtungsvorrichtung 10 weist als Leuchtmittel eine Mehrzahl von auf einem Band angeordneten Mehrfarb-LED-Einheiten 3 auf. Diese Mehrfarb-LED-Einheiten 3, welche nachfolgend auch einfach als LED-Einheiten 3 bezeichnet werden, realisieren jeweils ein einzelnes Halbleiterbauelement mit mehreren Einfarb-LEDs 301-304 und einem Mikrocontroller 4. Die Einfarb-LEDs 301-304 und der Mikrocontroller 4 sind von einem Gehäuse 7 einer jeweiligen LED-Einheit 3 umgeben. In einer Ausführungsform der Beleuchtungsvorrichtung 10 sind diese Komponenten gemeinsam mit einem Sensor 8 (s. Figur 3) in dem Gehäuse 7 des Halbleiterbauelements integriert, welcher beispielsweise als Lichtsensor ausgebildet ist, um einen aktuellen Helligkeitswert an der LED-Einheit 3 ermitteln zu können. Alternativ oder zusätzlich ist der Sensor 8 als Temperatursensor ausgebildet, sodass ein aktueller Temperaturwert am Ort der LED-Einheit 3 ermittelt werden kann.

Die Einfarb-LED 301 ist zum Beispiel als eine rote LED, die Einfarb-LED 302 als eine grüne LED, die Einfarb-LED 303 als eine blaue LED und die Einfarb-LED 304 als eine weiße LED ausgebildet. Die Farbangaben beziehen sich dabei auf die Farbe beziehungsweise die Wellenlänge oder den Wellenlängenbereich des von der jeweiligen LED emittierenden Lichts. Mit den bandförmig angeordneten LED-Einheiten 3 kann eine sehr hohe Packungsdichte erreicht werden (je nach Gehäuseform von zum Beispiel 144 bis 367 LEDs/m), sodass ein platzsparenden Aufbau mittels der Beleuchtungsvorrichtung 10 erzielbar ist.

Die einzelnen LED-Einheiten 3 werden über einen digitalen Datenstrom in der Form eines Bitstroms angesteuert, der mittels des internen Datenbusses 2 der Beleuchtungsvorrichtung 10 den einzelnen LED-Einheiten 3 zugeführt wird. Der interne Datenbus 2 umfasst eine Leitung CL für den Takt und eine Leitung DL für den Bitstrom.

Die Signale auf dem internen Datenbus 2 stammen von dem Verarbeitungsmodul 1, das an den Kraftfahrzeug-Datenbus 6 des Kraftfahrzeugs 100 gekoppelt ist. Das Verarbeitungsmodul 1 umfasst einen LIN-Transceiver 101, der entsprechende digitale Signale zur Ansteuerung der LED-Einheiten 3 vom Kraftfahrzeug-Datenbus 6 abgreift, sowie ein Mikroprozessor 102, der die abgegriffenen Signale in entsprechende Datensignale auf der Datenleitung DL des internen Datenbus 2 wandelt. Die auf dem Kraftfahrzeug-Datenbus 6 übertragenen Signale umfassen dabei Signale, welche für die Beleuchtungsvorrichtung 10 bestimmt sind und ein für die Beleuchtungsvorrichtung 10 einzustellendes Lichtmuster festlegen.

Diese Signale stammen wiederum von einem Steuergerät des Kraftfahrzeugs 100, welches beispielsweise basierend auf einer Eingabe des Fahrers das zu generierende Lichtmuster festlegt und als entsprechendes Signal auf den Kraftfahrzeug-Datenbus 6 gibt. Über das Verarbeitungsmodul 1 wird erkannt, ob das Lichtmuster entsprechend dem aktuellen Signal auf dem Kraftfahrzeug-Datenbus 6 für die Beleuchtungsvorrichtung vorgesehen ist. Ist dies der Fall, wird das Signal mittels des Mikroprozessors 102 in ein entsprechendes Signal für den internen Datenbus 2 umgesetzt.

Der Kraftfahrzeug-Datenbus 6 ist beispielsweise ein LIN-Bus (LIN = "Local Interconnect Network"). Der interne Datenbus 2 kann zum Beispiel ein SPI-Bus sein (SPI = "Serial Peripheral Interface"). Vorzugsweise werden dabei die Signale für den interne Datenbus 2 von dem Mikroprozessor 102 mittels einer SPI-Software erzeugt. Eine SPI-Software stellt eine Programmbibliothek dar, mit der beliebige freie Pins des Mikroprozessors 102 zur Signalabgabe auf den SPI-Bus genutzt werden können. Alternativ kann jedoch auch SPI-Hardware eingesetzt werden. Dabei sind spezielle SPI-Pins zur Signalabgabe auf den SPI-Bus vorgesehen. Die Verwendung von SPI-Software ist vorteilhaft, da in dem internen Datenbus 2 mehrere Leitungen DL und CL zur Ansteuerung einer größeren Anzahl von LED-Einheiten 3 vorgesehen sein können. Der interne Datenbus 2 kann als Alternative zu einem SPI-Bus auch als differentieller Datenbus oder als beliebig anderer Datenbus ausgestaltet sein. Ein differentieller Datenbus zeichnet sich dadurch aus, dass er digitale Daten über eine Spannungsdifferenz zwischen zwei Leitungen codiert.

In der Ausführungsform gemäß Figur 2 sind neben den Leitungen CL und DL zwei Stromleitungen L1 und L2 vorgesehen, welche an eine Gleichspannungsversorgung 5 angeschlossen sind. Basierend auf dem über die Datenleitung DL empfangenen Bitstrom erfolgt eine Pulsweitenmodulation (PWM) des den einzelnen LEDs 301-304 zugeführten Stroms, um hierdurch die LEDs 301-304 entsprechend dem Bitstrom auf der Datenleitung DL anzusteuern.

Der Aufbau einer einzelnen LED-Einheit 3 gemäß den Figuren 1 und 2 ist im Detail in Figur 3 illustriert. Die dargestellten Komponenten der LED-Einheit 3 sind dabei in einem einzelnen Halbleiterbauelement integriert. Die Signale des internen Datenbusses 2 werden über eine Kommunikationsschnittstelle COM der LED-Einheit 3 empfangen. Das Taktsignal der Taktleitung CL wird an den weiter unten beschriebenen Mikroprozessor 401 weitergeleitet, wohingegen der Datenstrom der Datenleitung DL nach Decodierung in der Kommunikationsschnittstelle COM auf 8-Bit-Schieberegister SR0-SR4 gegeben wird. Der vom Schieberegister SR0 ausgegebene Wert zeigt dabei die gewünschte Gesamthelligkeit der LED-Einheit 3 an, wohingegen über die Werte der Schieberegister SR1 bis SR4 die Farbanteile der einzelnen Einfarb-LEDs 301-304 zur Erzeugung der gewünschten Mischfarbe ausgegeben werden. Insbesondere wird über das Schieberegister SR1 der Farbanteil der rot emittierenden LED 301, über das Schieberegister SR2 der Farbanteil der grün emittierenden LED 302, über das Schieberegister 303 der Farbanteil der blauen emittierenden LED 303 und über das Schieberegister 304 der Farbanteil der Weißlicht emittierenden LED 304 ausgegeben.

Die Werte der einzelnen Schieberegister werden dem Mikrocontroller 4 zugeführt, der eine Logik bzw. einen Mikroprozessor 401 sowie einen zugeordneten nichtflüchtigen EEPROM-Speicher 402 aufweist. In diesem Speicher 402 können insbesondere Kalibrierungsdaten hinterlegt sein, die aus einem Kalibriervorgang der LED-Einheit 3 stammen und für einen vorgegebenen Standard-Temperaturwert der LED-Einheit 3 festlegen, wie die Betriebsströme der einzelnen Einfarb-LEDs 301-304 einzustellen sind, damit der aus dem Schieberegister SR0 stammende Gesamthelligkeitswert sowie die Farbmischung (d.h. der diesbezügliche Farbort) entsprechend den Werten aus den Schieberegistern SR1 bis SR4 erreicht werden.

Der Mikroprozessor 401 greift auf die im Speicher 402 hinterlegten Werte zurück und kann einen aktuellen Helligkeits- und/oder Temperaturwert mittels des Sensors 8 empfangen, der im Halbleiterbauelement der LED-Einheit 3 integriert ist. Aufgrund der bidirektionalen Kommunikationsfähigkeit der LED-Einheit 3 beziehungsweise des Mikrocontrollers 4 mit dem Verarbeitungsmodul 1 kann fortlaufend, in vorgegebenen Zeitintervallen oder auf Anfrage seitens des Verarbeitungsmoduls 1 ein aktueller Statuswert der LED-Einheit 3 ermittelt werden, welcher Auskunft über eine Funktionalität der LED-Einheit 3 geben kann. Mittels des Verarbeitungsmoduls 1 kann eine jeweilige LED-Einheit 3 gezielt angesteuert und ein aktueller Statuswert abgerufen werden.

Im Mikroprozessor 401 ist zum Beispiel ein Temperaturund/oder Helligkeits-Algorithmus hinterlegt, der unter Zugriff auf den Speicher 402 die entsprechenden Betriebsströme für den oben genannten Standard-Temperaturwert bestimmt und diese Betriebsströme bei Abweichung des vom Sensor 8 stammenden aktuellen Temperatur- und/oder Helligkeitswerts von dem Standard-Temperaturwert geeignet korrigiert.

Auf diese Weise kann eine gewünschte Helligkeit und ein vorgegebener Farbort entsprechend den Werten aus den Schieberegistern SR0-SR4 an eine Helligkeit des Umgebungslichts kontrolliert angepasst werden, um mittels der Beleuchtungsvorrichtung 10 ein ansprechendes oder gewünschtes Lichtmuster zu erzielen. In dem Temperatur-/Helligkeits-Algorithmus des Mikroprozessors 401 kann somit die Tatsache berücksichtigt werden, dass die Temperatur und/oder Helligkeit am Ort der LED-Einheit 3 Auswirkungen auf ein äußeres Erscheinungsbild haben kann, so dass zur Erreichung einer erwünschten Helligkeit und eines erwünschten Farborts eine temperatur- und/oder helligkeitsabhängige Korrektur durchführbar ist.

Der Sensor 8 ist dazu ausgebildet, mittels der Kommunikationsschnittstelle COM mit dem Verarbeitungsmodul 1 zu kommunizieren. Eine solche Kommunikation umfasst ein Empfangen und Versenden von Signalen oder Daten der jeweiligen Komponenten. Beispielsweise fragt das Verarbeitungsmodul 1 in vorgegebenen Zeitintervallen bei dem Sensor 8 nach dem aktuellen Temperatur- und/oder Helligkeitswert an, sodass der Sensor 8 die Temperatur und/oder Helligkeit misst und die Messsignale für das Verarbeitungsmodul 1 bereitstellt. Alternativ oder zusätzlich kann eine Kommunikation zwischen dem Verarbeitungsmodul 1 und dem Sensor 8 mittels des Mikrocontrollers 401 der jeweiligen LED-Einheit 3 erfolgen, welcher mit dem Verarbeitungsmodul 1 und mit dem Sensor 8 signaltechnisch gekoppelt ist und eine bidirektionale Kommunikation zwischen den beiden Komponenten ermöglicht.

Die Betriebsströme für die einzelnen LEDs 301-304 werden über einen Spannungsregler RE bereitgestellt, der aus der in Figur 2 gezeigten Spannungsversorgung 5 die positive Spannung VDD und die negative Spannung VSS erhält. Der Mikroprozessor 401 erzeugt ferner einen Takt für einen entsprechenden Oszillator OS, der PWM-Generatoren G1-G4 zugeführt wird. Die Betriebsströme der einzelnen LEDs 301-304 werden in den Generatoren G1 bis G4 über Pulsweitenmodulation erzeugt. Die aus dem Algorithmus zur Temperatur- und/oder Helligkeitskompensation stammenden Werte der Betriebsströme werden von dem Mikroprozessor 401 an die einzelnen Generatoren G1-G4 gegeben. Der Generator G1 erzeugt mittels Pulsweitenmodulation den Strom für die rot emittierende LED 301, der Generator G2 den Strom für die grün emittierende LED 302, der Generator G3 den Strom für die blau emittierende LED 303 und der Generator G4 den Strom für die weiß emittierende LED 304. Über die von den einzelnen Generatoren erzeugten PWM-Signale, die über den Stromausgang CO zu den Einfarb-LEDs 301-304 gelangen, wird dann für LED-Einheit 3 das entsprechende Licht mit der gewünschten Helligkeit und dem gewünschten Farbort gemäß dem Signal eingestellt, das über den internen Datenbus 2 zu der LED-Einheit 3 gelangt.

Mittels der beschriebenen Beleuchtungsvorrichtung 10 sowie dem Beleuchtungssystem 110 können der lichtemittierende Betrieb als auch weitere Funktionen des Kraftfahrzeugs 100 nutzbringend gesteuert werden. Beispielsweise können außer der Beleuchtungsfunktion ein Ausgeben einer Information bezüglich eines ermittelten Statuswertes erfolgen, sodass zu einem zuverlässigen und sicheren Betrieb der Beleuchtungsvorrichtung 10 und des Kraftfahrzeugs 100 beigetragen wird.

### Bezugszeichenliste

- 1: Verarbeitungsmodul
- 10: Beleuchtungsvorrichtung
- 100: Kraftfahrzeug
- 101: LIN-Transceiver
- 102: Mikroprozessor
- 110: Beleuchtungssystem
- 2: interner Datenbus
- 3: Mehrfarb-LED-Einheit
- 301-304: Einfarb-LEDs
- 4: Mikrocontroller
- 401: Mikroprozessor
- 402: EEPROM
- 5: Spannungsversorgung
- 6: Kraftfahrzeug-Datenbus
- 7: Gehäuse der LED-Einheit
- 8: Sensor

- CL: Leitung für Taktsignal
- CO: Stromausgang
- COM: Kommunikationsschnittstelle
- DL: Datenleitung
- G1-G4: PWM-Generatoren
- L1-L2: Stromleitungen
- OS: Oszillator
- RE: Spannungsregler
- SR0-SR4: Schieberegister
- VDD, VSS: Spannungen

## Patentansprüche

1. Beleuchtungsvorrichtung (10) für ein Kraftfahrzeug (100), umfassend:
- ein Verarbeitungsmodul (1), welches dazu ausgebildet ist, Signale von einem Datenbus (6) des Kraftfahrzeugs (100) zu empfangen, zu verarbeiten und zu versenden, und
- eine Mehrzahl von LED-Einheiten (3), welche jeweils dazu ausgebildet sind, in einem betriebsgemäßen Zustand Licht mit einstellbarer Helligkeit und vorgegebenem Farbort zu emittieren, wobei die LED-Einheiten (3) jeweils einen Mikrocontroller (4) und eine Mehrzahl von LEDs (301, 302, 303, 304) aufweisen, wobei der jeweilige Mikrocontroller (4) und die zugehörigen LEDs (301, 302, 303, 304) von einem Gehäuse (7) der jeweiligen LED-Einheit (3) umgeben sind, und wobei die LED-Einheiten (3) weiter dazu ausgebildet sind, bidirektional mit dem Verarbeitungsmodul (1) zu kommunizieren, sodass mittels der LED-Einheiten (3) und des Verarbeitungsmoduls (1) ein aktueller Statuswert einer jeweiligen LED-Einheit (3) ermittelbar ist, welcher repräsentativ für eine Funktionalität der jeweiligen LED-Einheit (3) ist, und wobei der aktuelle Statuswert der jeweiligen LED-Einheit (3) unabhängig von einem Betriebszustand der zugehörigen LEDs (301, 302, 303, 304) ermittelbar ist, wobei eine jeweilige LED-Einheit (3) einen Temperatursensor (9) umfasst, der dazu ausgebildet ist, einen aktuellen Temperaturwert an der jeweiligen LED-Einheit (3) zu messen und bidirektional mit dem Verarbeitungsmodul (1) zu kommunizieren, sodass mittels des Temperatursensors (9) und des Verarbeitungsmoduls (1) der aktuelle Temperaturwert an der jeweiligen LED-Einheit (3) ermittelbar ist, und **dadurch gekennzeichnet, dass** eine jeweilige LED-Einheit (3) einen Lichtsensor (8) umfasst, der dazu ausgebildet ist, einen aktuellen Helligkeitswert an der jeweiligen LED-Einheit (3) zu messen und bidirektional mit dem Verarbeitungsmodul (1) zu kommunizieren, sodass mittels des Lichtsensors (8) und des Verarbeitungsmoduls (1) der aktuelle Helligkeitswert an der jeweiligen LED-Einheit (3) ermittelbar ist.

2. Beleuchtungsvorrichtung (10) nach Anspruch 1, bei der der Mikrocontroller (4) und das Verarbeitungsmodul (1) dazu ausgebildet sind, bidirektional miteinander zu kommunizieren.

3. Beleuchtungsvorrichtung (10) nach einem der Ansprüche 1 bis 2, bei der eine jeweilige LED-Einheit (3) eine Mehrfarb-LED-Einheit und die zugehörigen LEDs (301, 302, 303, 304) jeweils Einfarb-LEDs sind.

4. Beleuchtungsvorrichtung (10) nach einem der Ansprüche 1 bis 3, bei der eine jeweilige LED-Einheit (3) eine RGB-LED-Einheit und/oder eine RGBW-LED-Einheit umfasst.

5. Beleuchtungssystem (110) für ein Kraftfahrzeug (100), umfassend:
- das Kraftfahrzeug (100), und
- mindestens eine Beleuchtungsvorrichtung (10) nach einem der Ansprüche 1 bis 4.

6. Beleuchtungssystem (110) nach Anspruch 5, bei dem die Beleuchtungsvorrichtung (10) in dem Kraftfahrzeug (100) angeordnet und als Innenraumbeleuchtung ausgebildet ist.

7. Beleuchtungssystem (110) nach Anspruch 5 oder 6, bei der die Beleuchtungsvorrichtung (10) an einer Außenseite des Kraftfahrzeugs (100) angeordnet und als Außenbeleuchtung ausgebildet ist.

8. Verfahren zum Betreiben eines Beleuchtungssystems (110) für ein Kraftfahrzeug (100) nach einem der Ansprüche 5 bis 7, umfassend:
- Empfangen von Statussignalen einer jeweiligen LED-Einheit (3), welche repräsentativ für eine Funktionalität der jeweiligen LED-Einheit (3) sind,
- Ermitteln eines aktuellen Statuswertes der jeweiligen LED-Einheit (3) in Abhängigkeit der empfangenen Messsignale der jeweiligen LED-Einheit (3), und
- Steuern einer Funktion des Kraftfahrzeugs (100) in Abhängigkeit des ermittelten Statuswertes der jeweiligen LED-Einheit (3).

9. Verfahren nach Anspruch 8, bei dem das Steuern einer Funktion des Kraftfahrzeugs (100) in Abhängigkeit des ermittelten Statuswertes der jeweiligen LED-Einheit (3) umfasst:
Ausgeben einer Information in Abhängigkeit des ermittelten Statuswertes der jeweiligen LED-Einheit (3).

10. Verfahren nach Anspruch 8 oder 9, bei dem das Steuern einer Funktion des Kraftfahrzeugs (100) in Abhängigkeit des ermittelten Statuswertes der jeweiligen LED-Einheit (3) umfasst:
Deaktivieren einer Funktion des Kraftfahrzeugs (100) in Abhängigkeit des ermittelten Statuswertes der jeweiligen LED-Einheit (3).

## Claims

1. Lighting apparatus (10) for a motor vehicle (100), comprising:
- a processing module (1) designed to receive, process and send signals from a data bus (6) of the motor vehicle (100), and
- a plurality of LED units (3) each designed so as, in an operational state, to emit light of adjustable brightness and prescribed colour locus, wherein the LED units (3) each have a microcontroller (4) and a plurality of LEDs (301, 302, 303, 304), wherein the respective microcontroller (4) and the associated LEDs (301, 302, 303, 304) are surrounded by a package (7) of the respective LED unit (3), and wherein the LED units (3) are further designed to communicate bidirectionally with the processing module (1), so that a present status value of a respective LED unit (3), which status value is representative of a functionality of the respective LED unit (3), is ascertainable by means of the LED units (3) and the processing module (1), and wherein the present status value of the respective LED unit (3) is ascertainable independently of an operating state of the associated LEDs (301, 302, 303, 304), wherein a respective LED unit (3) comprises a temperature sensor (9) that is designed to measure a present temperature value on the respective LED unit (3) and to communicate bidirectionally with the processing module (1), so that the present temperature value on the respective LED unit (3) is ascertainable by means of the temperature sensor (9) and the processing module (1), and **characterized in that** a respective LED unit (3) comprises a light sensor (8) designed to measure a present brightness value on the respective LED unit (3) and to communicate bidirectionally with the processing module (1), so that the present brightness value on the respective LED unit (3) is ascertainable by means of the light sensor (8) and the processing module (1).

2. Lighting apparatus (10) according to Claim 1, in which the microcontroller (4) and the processing module (1) are designed to communicate bidirectionally with one another.

3. Lighting apparatus (10) according to either of Claims 1 and 2, in which a respective LED unit (3) is a multicolour LED unit and the associated LEDs (301, 302, 303, 304) are each single-colour LEDs.

4. Lighting apparatus (10) according to one of Claims 1 to 3, in which a respective LED unit (3) comprises an RGB LED unit and/or an RGBW LED unit.

5. Lighting system (110) for a motor vehicle (100), comprising:
- the motor vehicle (100), and
- at least one lighting apparatus (10) according to one of Claims 1 to 4.

6. Lighting system (110) according to Claim 5, in which the lighting apparatus (10) is arranged in the motor vehicle (100) and is in the form of interior lighting.

7. Lighting system (110) according to Claim 5 or 6, in which the lighting apparatus (10) is arranged on an outside of the motor vehicle (100) and is in the form of exterior lighting.

8. Method for operating a lighting system (110) for a motor vehicle (100) according to one of Claims 5 to 7, comprising:
- receiving status signals of a respective LED unit (3), which are representative of a functionality of the respective LED unit (3),
- ascertaining a present status value of the respective LED unit (3) on the basis of the received measurement signals of the respective LED unit (3), and
- controlling a function of the motor vehicle (100) on the basis of the ascertained status value of the respective LED unit (3).

9. Method according to Claim 8, in which the controlling of a function of the motor vehicle (100) on the basis of the ascertained status value of the respective LED unit (3) comprises:
outputting information on the basis of the ascertained status value of the respective LED unit (3).

10. Method according to Claim 8 or 9, in which the controlling of a function of the motor vehicle (100) on the basis of the ascertained status value of the respective LED unit (3) comprises:
deactivating a function of the motor vehicle (100) on the basis of the ascertained status value of the respective LED unit (3).

## Revendications

1. Dispositif d'éclairage (10) pour un véhicule automobile (100), comprenant :
- un module de traitement (1) qui est réalisé pour recevoir, traiter et envoyer des signaux d'un bus de données (6) du véhicule automobile (100), et
- une pluralité d'unités à DEL (3) qui sont respectivement réalisées pour émettre dans un état opérationnel de la lumière d'une luminosité réglable et d'une localisation chromatique prédéfinie, les unités à DEL (3) présentant respectivement un microcontrôleur (4) et une pluralité de DEL (301, 302, 303, 304), le microcontrôleur (4) respectif et les DEL associées (301, 302, 303, 304) étant entourés d'un boîtier (7) de l'unité à DEL (3) respective, et les unités à DEL (3) étant en outre réalisées pour communiquer de manière bidirectionnelle avec le module de traitement (1) de sorte que les unités à DEL (3) et le module de traitement (1) permettent de déterminer une valeur d'état actuelle d'une unité à DEL (3) respective qui représente une fonctionnalité de l'unité à DEL (3) respective, et la valeur d'état actuelle de l'unité à DEL (3) respective pouvant être déterminée indépendamment d'un état de fonctionnement des DEL (301, 302, 303, 304) associées, une unité à DEL (3) respective comprenant un capteur de température (9) qui est réalisé pour mesurer une valeur de température actuelle au niveau de l'unité à DEL respective (3) et pour communiquer de manière bidirectionnelle avec le module de traitement (1) de sorte que le capteur de température (9) et le module de traitement (1) permettent de déterminer la valeur de température actuelle au niveau de l'unité à DEL (3) respective, et
**caractérisé en ce qu'**une unité à DEL (3) respective comprend un capteur de lumière (8) qui est réalisé pour mesurer une valeur de luminosité actuelle au niveau de l'unité à DEL (3) respective et pour communiquer de manière bidirectionnelle avec le module de traitement (1) de sorte que le capteur de lumière (8) et le module de traitement (1) permettent de déterminer la valeur de luminosité actuelle au niveau de l'unité à DEL (3).

2. Dispositif d'éclairage (10) selon la revendication 1, dans lequel le microcontrôleur (4) et le module de traitement (1) sont réalisés pour communiquer ensemble de manière bidirectionnelle.

3. Dispositif d'éclairage (10) selon l'une quelconque des revendications 1 à 2, dans lequel une unité à DEL (3) respective est une unité à DEL polychrome et les DEL (301, 302, 303, 304) associées sont des DEL monochromes respectivement.

4. Dispositif d'éclairage (10) selon l'une quelconque des revendications 1 à 3, dans lequel une unité à DEL (3) respective comprend une unité à DEL RGB et/ou une unité à DEL RGBW.

5. Système d'éclairage (110) pour un véhicule automobile (100), comprenant :
- le véhicule automobile (100), et
- au moins un dispositif d'éclairage (10) selon l'une quelconque des revendications 1 à 4.

6. Système d'éclairage (110) selon la revendication 5, dans lequel le dispositif d'éclairage (10) est disposé dans le véhicule automobile (100) et est réalisé sous forme d'éclairage d'habitacle.

7. Système d'éclairage (110) selon la revendication 5 ou 6, dans lequel le dispositif d'éclairage (10) est disposé sur une face extérieure du véhicule automobile (100) et est réalisé sous forme d'éclairage extérieur.

8. Procédé d'exploitation d'un système d'éclairage (110) pour un véhicule automobile (100) selon l'une quelconque des revendications 5 à 7, comprenant les étapes consistant à :
- recevoir des signaux d'état d'une unité à DEL (3) respective qui représentent une fonctionnalité de l'unité à DEL (3) respective,
- déterminer une valeur d'état actuelle de l'unité à DEL (3) respective en fonction des signaux de mesure reçus de l'unité à DEL (3) respective, et
- commander une fonction du véhicule automobile (100) en fonction de la valeur d'état déterminée de l'unité à DEL (3) respective.

9. Procédé selon la revendication 8, dans lequel la commande d'une fonction du véhicule automobile (100) en fonction de la valeur d'état déterminée de l'unité à DEL (3) respective comprend l'étape consistant à :
sortir une information en fonction de la valeur d'état déterminée de l'unité à DEL (3) respective.

10. Procédé selon la revendication 8 ou 9, dans lequel la commande d'une fonction du véhicule automobile (100) en fonction de la valeur d'état déterminée de l'unité à DEL (3) respective comprend les étapes consistant à :
désactiver une fonction du véhicule automobile (100) en fonction de la valeur d'état déterminée de l'unité à DEL (3) respective.
